Europäisches Patentamt

European Patent Office

Office européen des brevets

(19)

(11) Veröffentlichungsnummer: **0 021 254**
**B1**

(12) **EUROPÄISCHE PATENTSCHRIFT**

(45) Veröffentlichungstag der Patentschrift:
06.11.85

(51) Int. Cl.⁴: **G 06 F 13/00**, G 06 F 15/16

(21) Anmeldenummer: **80103254.1**

(22) Anmeldetag: **11.06.80**

(54) Verfahren und Anordnung zur Anschaltung mehrerer Zentralprozessoren an Datenspeichergeräte über jewels einen von wenigstens zwei Peripherieprozessoren.

(30) Priorität: **20.06.79 DE 2924899**

(43) Veröffentlichungstag der Anmeldung:
**07.01.81 Patentblatt 81/1**

(45) Bekanntmachung des Hinweises auf die Patenterteilung:
**06.11.85 Patentblatt 85/45**

(84) Benannte Vertragsstaaten:
**AT BE CH FR GB IT LI LU NL SE**

(56) Entgegenhaltungen:
**DE - A - 2 222 855**
**DE - A - 2 339 787**
**US - A - 3 725 872**

**IBM TECHNICAL DISCLOSURE BULLETIN, Band 19, Nr. 8, Januar 1977 NEW YORK (US) MITCHELL: "Input/Output Control Unit Busy Disconnect Mechanism" Seiten 2999-3002**
**IBM TECHNICAL DISCLOSURE BULLETIN, Band 10, Nr. 7, Dezember 1967 NEW YORK (US) ANDERSON: "Overlapped Storage Requests By A Channel" Seiten 927-928**
**IBM Technichal Disclosure Bulletin Vol. 14 No.8 January 1972, M.I. Schor "Use of command retry function to free channel interface", page 2284**
**IBM Technical Disclosure Bulletin Vol. 15 No. 12, May**

(73) Patentinhaber: **Siemens Aktiengesellschaft, Berlin und München Wittelsbacherplatz 2, D-8000 München 2 (DE)**

(72) Erfinder: **Weiss, Eckardt, Putzbrunner Strasse 121, D-8000 München 83 (DE)**
Erfinder: **Salzmann, Herbert, Hermann-Köhl-Strasse 8, D-8900 Augsburg (DE)**

(56) Entgegenhaltungen: (Fortsetzung)
**1973, R.J. Dugan; L.S. Heim and R.G. Raihala: "Input/outputcontrol unit enhancement" Pages 3830-3831.**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein Verfahren und eine Schaltungsanordnung nach den Oberbegriffen der Patentansprüche 1 und 2.

In sogenannten Mehrrechner-Systemen entstehen nicht unbeträchtliche Leistungsverluste durch Kollisionen beim Zugriff mehrerer Systeme auf Datenbestände, die auf gemeinen Datenspeicher-Geräten hoher Speicherdichte, beispielsweise auf gemeinsamen Plattenspeichersystemen liegen. Dies hängt damit zusammen, dass die Verknüpfung der einzelnen Peripherieprozessoren mit dem gemeinsamen Datenspeichergerät mit Hilfe von auf der Steuerungs- und/oder der Geräteebene vorhandener Schaltvielfache erfolgt, die miteinander nicht synchronisiert sind. Dies bedeutet z.B., dass die Steuerung nicht erkennt, wenn das Datenspeichergerät, das tätig oder reserviert war, von einem anderen Peripherieprozessor wieder freigegeben wird. Im einzelnen lassen sich diese Kollisionsverluste, die den Durchsatz von Mehrrechner-Systemen der eingangs genannten Art entsprechend verringern, wie folgt zusammenfassen:

a) Behinderung am Schaltvielfach der Gerätesteuerung aufgrund der statistischen Wahrscheinlichkeit, dieses Schaltvielfach belegt vorzufinden und des Zeitbedarfs, bis die Verfügbarkeit des Schaltvielfachs und der Steuerung dem Betriebssystem gemeldet wird.
b) Behinderung am Schaltvielfach im Bereich der Geräteebene.
c) Aufwendige Hardware-Software-Massnahmen zur Beseitigung der Behinderungseffekte, die durch die Realzeitanforderungen an die System-Software und Zeitverluste in der Synchronisierphase für die Wiederholung eines Zugriffs zu einem Gerät gegeben sind.

Aus IBM Technical Disclosure Bulletin, Vol. 19, No. 8, Januar 1977, ist die Anschaltung mehrerer Prozessoren über einen gemeinsamen Peripherieprozessor an mehrere Datenspeichergeräte bekannt, bei der im Peripherieprozessor ein Pufferspeicher zur Zwischenspeicherung von Adressen zur Auswahl jeweils eines Datenspeichergerätes vorgesehen ist. Diese bekannte Anordnung dient zur Durchführung eines Verfahrens, bei dem der Steuerungszustand «Tätig» bei Belegung des gemeinsamen Daten- und/oder Steuerpfades zu einem von mehreren an der Steuerung angeschlossenen Geräten behandelt wird, wobei auch die Belegung der Steuerung durch weitere Ein/Ausgabe-Kanäle berücksichtigt wird. Nicht berücksichtigt wird dagegen der Gerätezustand «Tätig» von Geräten, die über mehr als eine Steuerung erreichbar sind und die über eine jeweils andere Steuerung gerade tätig sind, während sie von einer freien Steuerung ausgewählt werden. In diesem Fall wird der Auftrag zwar von der nicht tätigen Steuerung aufgenommen, muss dann aber trotzdem mit dem Status «Device busy» an die Software beendet werden. Dieser Zustand erfordert somit eine ständige Wiederholung des Auftrages durch die Software, bis der Zustand erreicht ist, dass Steuerung und Gerät gleichzeitig frei sind.

Aus der US-Patentschrift 3 725 872 (BALOGH a.o.) ist ein System mit mehreren Prozessoren bekannt, die über je einen Peripherieprozessor mit mehreren Datenspeichergeräten verbunden sind, wobei mittels eines zwischengeschalteten Schaltvielfachs jeder Peripherieprozessor mit jedem Datenspeichergerät verbunden werden kann.

Aus der DE-OS 2 222 855 (Philips) ist ferner eine Schaltungsanordnung zum Verbinden einer Anzahl von Prozessoren mit einer Anzahl von Speichermodulen bekannt, bei der mittels einer Steueranordnung jeder der Prozessoren mit jedem der Speichermodule verbindbar ist, so dass ein Datentransfer zwischen jeder Kombination eines Prozessors und eines Speichermoduls in nahezu jedem Moment möglich ist. Die Schaltungsanordnung enthält dazu eine erste Prioritätsschaltung, mit der bei mehreren Anfragen von mehreren Prozessoren betreffs einer Verbindung mit einem bestimmten Speichermodul die Anfrage mit der höchsten Priorität unter der Bedingung, dass das betreffende Modul frei ist, erfüllt wird. Ferner enthält die bekannte Schaltungsanordnung ein für alle Speichermodule gemeinsames Schienensystem zum Transport von Selektionsinformationen und Daten mit den einzelnen Schienen vorgeschalteten Registern zur Speicherung von Selektionsinformationen und Daten.

Schliesslich sind aus IBM-Technical Disclosure Bulletin, Vol. 14, No. 8, Januar 1972, Seite 2284 und Vol. 15, No. 12, Mai 1973, Seiten 3830 bis 3831 Verfahren zum Anschalten mehrerer Prozessoren an mehrere Peripheriegeräte unter Anwendung des sogenannten «Command Retry»-Modus bekannt, die nach einem fehlerhaften Ablauf eines Kanalbefehls, bei dem eine Steuerung mit einem Gerät unteilbar tätig war, vom Kanalwerk eine sofort oder zu einem späteren Zeitpunkt angeforderte Wiederholung des Kanalbefehls veranlassen. Die in den genannten IBM-Druckschriften angegebenen Beispiele für eine vorteilhafte Anwendung der Funktion «Comand Retry» befassen sich mit der Optimierung des Belegungszeitraums, während dem ein Kanal mit einer Steuerung und mit einem daran angeschlossenen Gerät tätig ist. Dabei ist das Gerät, mit dem gearbeitet wird, an der Steuerung bereits selektiert und bis zur Anforderung des «Command Retry» mit der Steuerung und dem Kanal bis zur Diskonnektion unteilbar tätig.

Der vorliegenden Erfindung liegt nun die Aufgabe zugrunde, ein Verfahren für den Zugriff mehrerer Zentralprozessoren zu gemeinsamen Datenspeichergeräten so zu verbessern, dass ein bereits gestarteter physikalischer Zugriff zur Benutzung eines gemeinsamen Gerätes bei Behinderung durch einen anderen Prozessor so angehalten wird, dass er zum Wiederstart möglichst wenig Verluste erzeugt.

Diese Aufgabe wird erfindungsgemäss mit den im kennzeichnenden Teil des Patentanspruchs 1 angegebenen Merkmalen gelöst.

Eine erfindungsgemäss ausgestaltete Schaltungsanordnung zur Durchführung des Verfahrens ergibt sich aus den Merkmalen des Anspruchs 2.

Der Vorteil des erfindungsgemässen Verfahrens besteht vor allem darin, dass erfolglose Zugriffe zum Datenspeichergerät für den Fall vermieden werden, dass das Gerät nur kurzzeitig von einem anderen System belegt ist. Die Verwendung je eines Auswahl-Pufferspeichers pro Kanalanschluss gibt nämlich die Möglichkeit, dass dort jede an die Steuerung gerichtete Auswahl zunächst zwischengespeichert und vorläufig beendet wird. Damit ist die Gerätesteuerung in die Lage versetzt, Ein/Ausgabe-Prozesse, die wegen Behinderung nicht unmittelbar fortsetzbar sind, nach Wegfall der Behinderung zu einem späteren Zeitpunkt im sogenannten Retry-Modus, unsichtbar zur System-Software, wieder anzustossen und entsprechend fortzusetzen. Retry-Modus bedeutet, dass die vorher unterbrochene Verbindung mit dem Ein/Ausgabe-Prozessor wieder hergestellt wird, indem der erste Befehl wiederholt und dann der gesamte Befehl durchgeführt wird.

Im folgenden wird die Erfindung anhand eines in der Zeichnung dargestellten Ausführungsbeispiels näher erläutert. Es zeigen:

Fig. 1 das Prinzipschaltbild für ein Mehrrechner-System gemäss der Erfindung

Fig. 2 den prinzipiellen Aufbau eines Peripherieprozessors gemäss Fig. 1

Fig. 3 den Funktionsablauf eines Ein/Ausgabe-Prozesses.

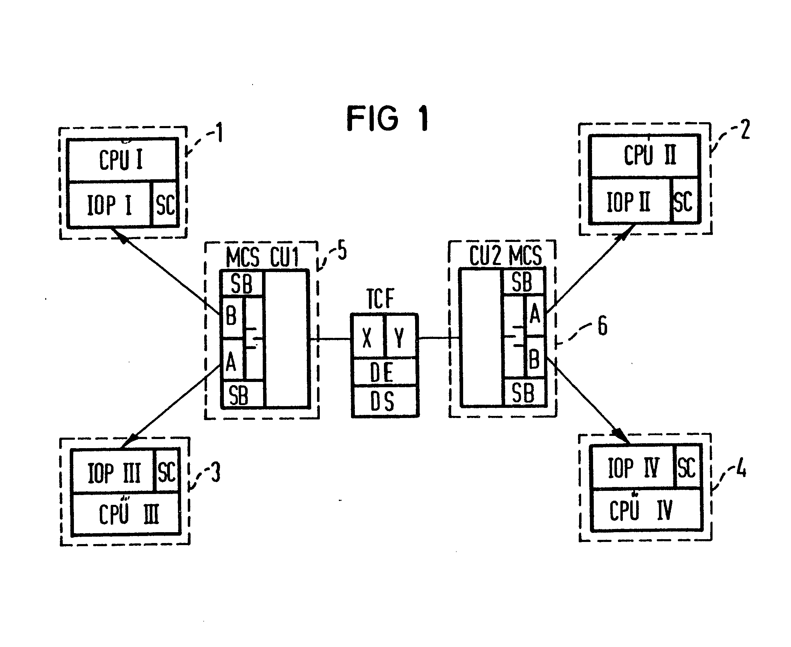

Die Fig. 1 zeigt ein Mehrrechner-System mit vier Einzelrechnern 1, 2, 3, 4, die im Blockmultiplex-Verfahren miteinander verknüpft sind. Jeder Einzelrechner besteht aus einem Zentralprozessor CPU I . . . IV und einem Ein/Ausgabe-Prozessor IOP I . . . IV, denen jeweils ein als Subkanal SC bezeichneter Registerspeicher, indiziert mit z.B. 256 Adressargumenten, zugeordnet ist. Die Verknüpfung der vier Zentralprozessoren CPU I . . . IV bzw. deren Ein/Ausgabe-Prozessoren IOP I . . . IV ist z.B. so getroffen, dass die Ein/Ausgabe-Prozessoren IOP I und IOP III einerseits und IOP II und IOP IV andererseits mit je einem Peripherieprozessor 5, 6 verbunden sind. Beide Peripherieprozessoren 5, 6 enthalten je ein Schaltvielfach in Form eines sogenannten Mehrkanalschalters MCS 1 bzw. MCS 2 mit je zwei Schalteingängen A und B sowie je eine Kontrolleinheit CU 1 bzw. CU 2. Im dargestellten Ausführungsbeispiel mit zwei Peripherieprozessoren 5, 6 ist zwischen den beiden Peripherieprozessoren und einem gemeinsamen Datenspeichergerät DS mit zugehöriger Geräteelektronik ein zweites Schaltvielfach in Form einer sogenannten Zweisteuerungseinrichtung TCF mit den beiden Schalteingängen X und Y vorgesehen. Beide Peripherieprozessoren 5, 6 weisen an jedem Systemanschluss der Gerätesteuerung je einen sogenannten Auswahl-Pufferspeicher SB auf.

Für den Fall, dass nur ein Peripherieprozessor vorgesehen ist, kann dessen Kontrolleinheit CU 1 bzw. CU 2 direkt, d.h. ohne Zwischenschaltung eines zweiten Schaltvielfachs, mit dem Datenspeichergerät verbunden werden.

Mit einer Schaltungsanordnung nach Fig. 1 lassen sich nun folgende Funktionen F1 . . . F4 realisieren:

Funktion F1:

Im Auswahl-Pufferspeicher SB erfolgt die Zwischenspeicherung des Adressarguments, das zum Adressieren des Datenspeichergerätes an der Gerätesteuerung notwendig ist. Der Pufferspeicher SB muss gross genug sein, um für jedes Gerät, das an der Gerätesteuerung adressierbar ist, das zur Adressierung benötigte Argument speichern zu können.

Der Auswahl-Pufferspeicher erlaubt die Übernahme und Zwischenspeicherung des Adressier-Arguments auch in der Zeit, in der die Gerätesteuerung mit anderen Aufgaben tätig ist. Dies ermöglicht in vorteilhafter Weise eine Parallelisierung der einzelnen Ein/Ausgabeprozesse.

Funktion F2:

Der Auswahl-Pufferspeicher SB ermöglicht ein Anfordern der Befehls-Übergabe an das zu adressierende Datenspeichergerät mit der vorläufigen Beendigung des 1. Befehls für das Gerät noch vor der eigentlichen Adressierung des Datenspeichergerätes durch den Peripherieprozessor. Die Anforderung des Befehls durch den Peripherieprozessor bedeutet für den Ein/Ausgabe-Prozessor IOP, das temporär keine Behinderung beim Zugriff auf das Gerät besteht. Die vorläufige Beendigung des Befehls durch Diskonnektion verhindert, dass der Ein/Ausgabe-Prozessor für die Dauer der zyklisch, periodischen Adressierung des Gerätes durch die Gerätesteuerung belegt bleibt. Der Ein/Ausgabe-Prozessor ist dagegen in der Lage, in dieser Zeit weitere Geräte-Anforderungen der Software an den Auswahl-Pufferspeicher des Peripherieprozessors weiterzuleiten oder andere Ein/Ausgabe-Anforderungen (z.B. Datentransfer mit anderen Gerätesteuerungen) zu tätigen.

Funktion F3:

Mit Hilfe des im Auswahl-Pufferspeichers SB gespeicherten Adressier-Arguments wird durch die Firmware des Peripherieprozessors im Falle des Belegtseins eine zyklisch-periodische Adressierung des Datenspeichergerätes durchgeführt.

Funktion F4:

Nach erfolgreicher Adressierung des Gerätes erfolgt eine Rekonnektion des Peripherieprozessors an den jeweiligen Ein/Ausgabe-Prozessor und zwar ohne Behinderung der Software. Dies führt nach Synchronisierung der Hardware und Firmware des Ein/Ausgabe-Prozessors zur Wiederholung des vorläufig beendeten 1. Befehls an das Datenspeichergerät und schliesslich zur Durchführung des gesamten Befehls.

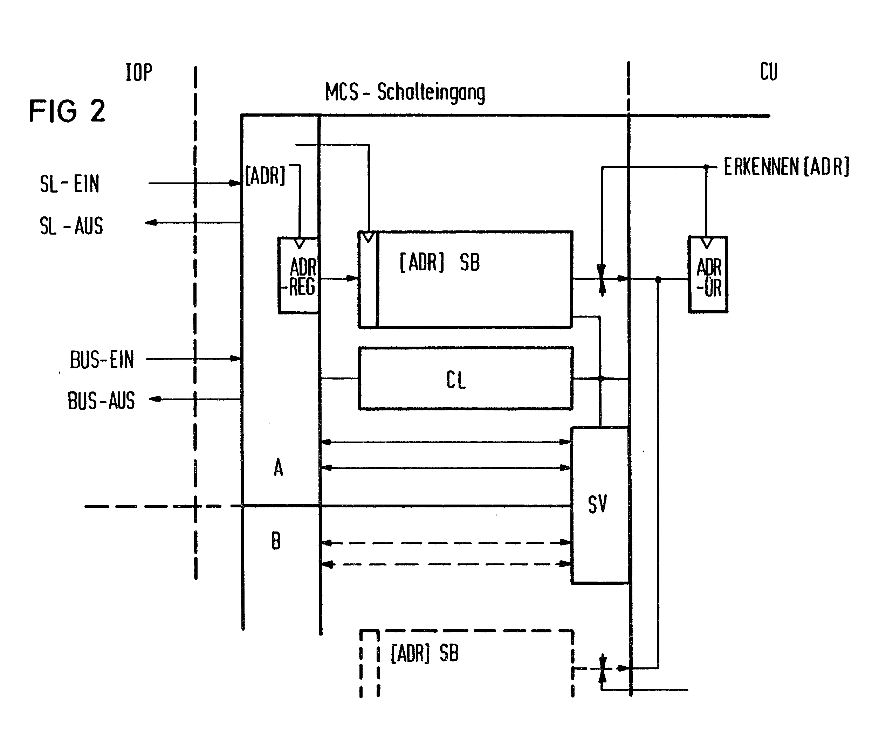

Einzelheiten der in einem Peripherieprozessor vorgesehenen Schaltung zum Anschluss eines Ein/Ausgabe-Prozessors sind in Fig. 2 dargestellt. Am Eingang der Schaltung sind zwei Sende-/ Empfangseinrichtungen bzw. sogenannte Schalteingänge A, B vorgesehen, die über hin- und rückführende Datenleitungen BUS-EIN und BUS-AUS und diese qualifizierende hin- und rückführende Steuerleitungen SL-EIN-, SL-AUS mit dem Ein/Ausgabe-Prozessor IOP verbunden sind. An die Datenleitungen ist ein Adressregister ADR-REG angeschlossen, das das Adress-Argument zum Zeitpunkt der Auswahl des Peripherieprozessors aufnimmt. Mit dem Adressregister ADR-REG ist der Eingang des Auswahl-Pufferspeichers SB verbunden, der beispielsweise als Byte-paralleles Schieberegister ausgebildet ist. Sein Ausgang ist mit einem Adress-Übernahmeregister ADR-ÜR in der Kontrolleinheit CU des Peripherieprozessors verbunden, um eine Übernahme des Adress-Arguments durch die Firmware zu ermöglichen. Die Kontroll-Logik CL enthält Stellglieder, die einerseits den Schnittstellenverkehr über die Steuer- und Datenleitungen und andererseits die Übernahme des Adressarguments und die Fortführung des vorläufig beendeten Ein/Ausgabe-Prozesses steuern. Schliesslich ist noch ein Schaltvielfach SV vorgesehen, das eine Verknüpfung zwischen der Kontrolleinheit CU und den beiden Schalteingängen A und B herstellt.

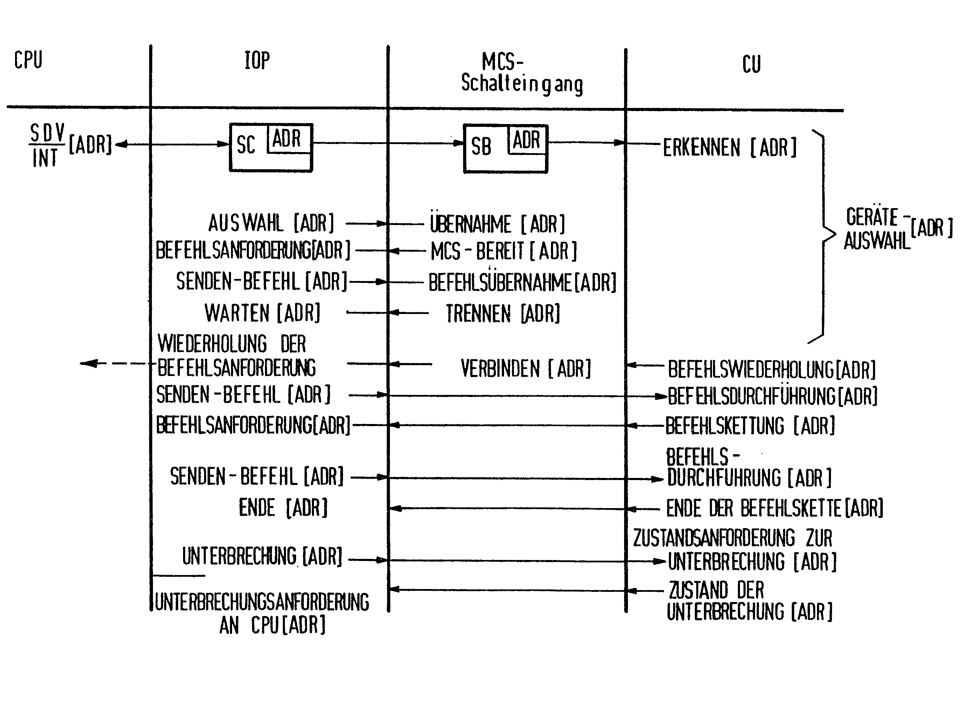

Anhand des in Fig. 3 dargestellten Funktionsablaufes wird ein Ein/Ausgabe-Prozess unter Verwendung eines Peripherieprozessors gemäss Fig. 2 näher erläutert.

Ein Ein/Ausgabe-Prozessor wird in der Weise eingeleitet, dass die Zentraleinheit CPU eines am Mehrrechner-System beteiligten Einzelrechners mit einem sogenannten Startbefehl SDV einen Kommunikationsbereich bzw. Subkanal SC aktiviert, der der Zentraleinheit CPU und dem zugehörigen Ein/Ausgabe-Prozessor IOP zur Bearbeitung eines Ein/Ausgabe-Prozesses dient. Der Kommunikationsbereich ist mit dem Adressargument 'ADR', das durch den Start-Befehl SDV an den Ein/Ausgabe-Prozessor IOP übergeben wird, indiziert. Der Ein/Ausgabeprozessor IOP übergibt in einer Auswahlsequenz AUSWAHL 'ADR' das reduzierte Adressargument an alle möglichen Subkomponenten eines Kanals, wobei jedoch nur jeweils eine Subkomponente dieses Adressargument erkennen und mit der Sequenz ÜBERNAHME 'ADR' akzeptieren darf. Wird das Adressargument erkannt und akzeptiert, so erfolgt die Zwischenspeicherung desselben in einem Speicherregister ADR-REG (siehe Fig. 2). Nunmehr erfolgt eine Quittierung der Subkomponente an den Ein/Ausgabe-Prozessor IOP darüber, dass das Adressargument (Index zum Kommunikationsbereich) erkannt und akzeptiert wurde. Es erfolgt die Meldung MSC BEREIT 'ADR' an den Ein/Ausgabe-Prozessor IOP. Um dem Ein/Ausgabe-Prozessor IOP den Zugang zum Kommunikationsbereich zu ermöglichen, wird jeder Kommunikationsschritt (Sequenz im Kanalprotokoll) mit dem Index zum Auffinden des Elements im Kommunikationsbereich 'ADR' durchgeführt.

Der Ein/Ausgabe-Prozessor IOP wendet sich nun nach Erkennen der Quittung MSC BEREIT 'ADR' an den Hauptspeicher, um mit der Sequenz BEFEHLSANFORDERUNG 'ADR' das erste Element des Kanalprogramms für den Index 'ADR' zu holen. Dieses erste Element des Kanalprogramms wird mit dem Kanalprotokoll SENDEN-BEFEHL 'ADR' an die zugehörige Kontrolleinheit CU gegeben. Die Kontrolleinheit hat nun in Abhängigkeit vom übergebenen Befehlstyp die Entscheidung zu fällen, ob der Befehl akzeptiert wird (BEFEHLSÜBERNAHME 'ADR'). Ist dies der Fall, so wird das Adressargument 'ADR' stationär in der Subkomponente, d.h. im Auswahlpuffer SB abgespeichert. In jedem Fall erfolgt das Kanalprotokoll vom Typ TRENNEN 'ADR', um dem Ein/Ausgabe-Prozessor entweder die endgültige Beendigung oder die vorläufige Beendigung einschliesslich der Fortführung des Kanalprogramms der Zentraleinheit in einem sogenannten BEFEHLSWIEDERHOLUNG-Programm zu ermöglichen.

Die Kanalprotokollschritte AUSWAHL 'ADR', ÜBERNAHME 'ADR', MCS BEREIT 'ADR' erfordern, dass die Zentraleinheit CPU, der Ein/Ausgabe-Prozessor IOP und die Kontrolleinheit CU während dieser Sequenz unteilbar verbunden bleiben. Ab dem Protokollschritt BEFEHLSANFORDERUNG 'ADR' ist die Zentraleinheit CPU frei. Die Sequenzen SENDEN-BEFEHL 'ADR', BEFEHLSÜBERNAHME 'ADR', TRENNEN 'ADR' erfordern die Unteilbarkeit der Verbindung zwischen dem Ein/Ausgabe-Prozessor IOP und der Kontrolleinheit CU. Ab dem Protokollschritt WARTEN 'ADR' ist der Ein/Ausgabe-Prozessor IOP frei.

Sofern am Peripherieprozessor keine Behinderung durch einen Zugriff seitens einer anderen Zentraleinheit gegeben ist, kann der inzwischen eingeleitete und nach Zwischenspeicherung der Auswahladresse unterbrochene Ein/Ausgabe-Prozess wie folgt fortgeführt und beendigt werden.

Dabei ist davon auszugehen, dass die Kontrolleinheit CU eine ungehinderte Möglichkeit hat, im Auswahlpuffer SB das Adressargument 'ADR' und damit den Index zum Subkanal SC zu erkennen (ERKENNEN 'ADR') und aufgrund eines innerhalb einer wählbaren Zeitspanne zyklusweisen Abrufs zu übernehmen. Ausserdem führt die Kontrolleinheit CU in direkter Adressierung die Auswahl eines physikalischen Gerätes, d.h. eines bestimmten Datenspeichergerätes durch, das mit 'ADR' übergeordnet codiert ist. Es besteht aber auch die Möglichkeit einer indirekten Adressierung, wenn mit den Daten, die mit dem ersten Befehl übertragen werden (BEFEHLSDURCHFÜHRUNG 'ADR') ein Argument übergeben wird, mit dem die Adresse eines physikalischen Gerätes beschrieben ist.

Die Kontrolleinheit CU vollzieht nun das Kanalprotokoll 'ADR', indem sie die vorher unterbrochene Verbindung mit dem Ein/Ausgabe-Prozessor IOP wieder herstellt. Der Ein/Ausgabe-Prozessor IOP führt daraufhin die Sequenz 'ADR' durch und übergibt mit 'ADR' erneut den ersten Befehl des Kanalprogramms des den jeweiligen Ein/Ausgabe-Prozesses anstossenden Zentralprozessors.

Mit jeder Beendigung des Kanalprotokolls vom Typ BEFEHLSDURCHFÜHRUNG 'ADR' (Datentransfer) kann die Kanalbefehlskette des Zentralprozessors fortgeführt werden (BEFEHLSKETTUNG 'ADR'), wenn dieses im Kanalbefehlswort vorgesehen ist. Die Fortführung der Kanalbefehlskette führt im Ein/Ausgabe-Prozessor IOP zur Sequenz BEFEHLSANFORDERUNG 'ADR' und zur Sequenz SENDEN-BEFEHL 'ADR'.

Muss das Kanalprogramm aus der Sicht der Kontrolleinheit CU beendet werden, so übergibt sie das Protokoll vom Typ ENDE DER BEFEHLSKETTE 'ADR', was letzlich zur Sequenz vom Typ UNTERBRECHUNGSANFORDERUNG 'ADR' des Ein/Ausgabe-Prozessor IOP an den Zentralprozessor CPU führt.

Mit dem Vollzug des Funktionszustandswechsels (Unterbrechung-INT) des Zentralprozessors CPU kann die Software die Beendigungskriterien der Ein/Ausgabe für den INDEX 'ADR' aus dem Subkanal SC übernehmen und ihn somit freigeben. Gleichermassen erfolgt die Freigabe des stationären Zustandes für das Argument 'ADR' in der Kontrolleinheit CU mit dem Kanalprotokoll vom Typ ZUSTANDSANFORDERUNG ZUR UNTERBRECHUNG 'ADR'.

Das Kanalprotokoll BEFEHLSWIEDERHOLUNG 'ADR'- bis ENDE DER BEFEHLSKETTE 'ADR' vollzieht sich ausschliesslich zwischen dem Ein/Ausgabe-Prozessor IOP und der Kontrolleinheit CU ohne Behinderung der Software. Das Kanalprogramm ist jeweils nach der Beendigung der Sequenz vom Typ BEFEHLSDURCHFÜHRUNG 'ADR' vorläufig und ohne Befehlswiederholungsanforderung beendbar (TRENNEN 'ADR'), was den Leerlaufbefehl WARTEN für den Index 'ADR' zur Folge hat. Die Fortführung des Ein/Ausgabeprozesses geschieht mit der Sequenz vom Typ BEFEHLSKETTUNG 'ADR'. Diese Funktion ist Eigenschaft des Blockmultiplexkanals im Ein/Ausgabe-Prozessor IOP.

Gleichermassen ist auch nach jeder Sequenz vom Typ BEFEHLSDURCHFÜHRUNG 'ADR' eine vorläufige Beendigung des Kanalprogramms mit der Sequenz vom Typ TRENNEN 'ADR' und einer Befehlswiederholungsanforderung möglich. Dies führt dann über eine Sequenz vom Typ BEFEHLSWIEDERHOLUNG 'ADR' zur Fortführung des Kanalprogramms.

Mögliche Behinderungen im Kanalprotokoll zwischen dem Ein/Ausgabe-Prozessor IOP und der Kontrolleinheit CU ergeben sich nach der Sequenz TRENNEN 'ADR' bei den Sequenzen BEFEHLSWIEDERHOLUNG 'ADR' und BEFEHLSKETTUNG 'ADR', da der Ein/Ausgabe-Prozessor IOP frei sein muss, um mit dem Argument 'ADR' die Verbindung zum Subkanal SC und damit auch zur Kontrolleinheit CU wieder herzustellen. Dies gilt auch für die Aktivitäten nach der Sequenz UNTERBRECHUNG 'ADR' des Ein/Ausgabe-Prozessor IOP, da dann der Zentralprozessor CPU für den Wechsel des Funktionszustandes prinzipiell bereit sein muss. Es können jedoch immer alle Ein/Ausgabeprozesse, die im Subkanal stationär sind, unter der Initiative der Kontrolleinheit-CU bis zur Sequenz ENDE 'ADR' geführt werden.

Danach übernimmt der Ein/Ausgabe-Prozessor IOP die Initiative dadurch, dass er auf Fortführungsversuche der Kontrolleinheit CU mit der Fortführung des Ein/Ausgabeprozesses bis zur Sequenz ZUSTANDSANFORDERUNG ZUR UNTERBRECHUNG 'ADR' reagiert.

**Patentansprüche**

1. Verfahren zur Anschaltung mehrerer Zentralprozessoren (CPU I ... IV) über jeweils einen von wenigstens zwei Peripherieprozessoren (5, 6) an mehrere Datenspeichergeräte (DS), unter Verwendung jeweils eines zwischen dem jeweiligen Peripherieprozessor (5 bzw. 6) und den ihm jeweils zugeordneten Zentralprozessoren (CPU I, CPU III bzw. CPU II, CPU IV) vorgesehenen Schaltvielfachs (MCS) sowie einzelnen, jeweils an der Ein-/Ausgabe-Schnittstelle zwischen dem Ein-/Ausgabe-Prozessor (IOP I ... IV) des jeweiligen Zentralprozessors (CPU I ... IV) und dem zugehörigen Peripherieprozessor (5, 6) eingeschalteten Adress-Pufferspeichern (SB), wobei ein von jeweils einem der Zentralprozessoren (CPU I ... IV) angestossener Ein/Ausgabe-Prozess mit der Übertragung und Zwischenspeicherung einer, jeweils einem der Datenspeichergeräte (DS) zugeordneten Auswahladresse (ADR) in den Adress-Pufferspeicher (SB) beginnt, dadurch gekennzeichnet, dass nach Übergabe und Speicherung der Auswahladresse (ADR) die Ausführung des ersten Befehls des Ein/Ausgabe-Prozesses vorläufig zum Zwecke einer späteren Fortsetzung unterbrochen wird und dass, sofern keine Behinderung des eigenen Peripherieprozessors (5 bzw. 6) vorliegt, die zwischengespeicherte Auswahladresse (ADR) benutzt wird, um eine zyklisch-periodische Adressierung des Datenspeichergerätes (DS) durchzuführen und nach erfolgter Auswahl durch Wiederholung der Ausführung des ersten Befehls den vorläufig unterbrochenen Ein/Ausgabe-Prozess fortzuführen.

2. Schaltungsanordnung zur Anschaltung mehrerer Zentralprozessoren (CPU I ... IV) über jeweils einen von wenigstens zwei Peripherieprozessoren (5, 6) an mehrere Datenspeichergeräte (DS) unter Verwendung jeweils eines zwischen dem jeweiligen Peripherieprozessor (5 bzw. 6) und den ihm jeweils zugeordneten Zentralprozessoren (CPU I, CPU III bzw. CPU II, CPU IV) vorgesehenen Schaltvielfachs (MCS) sowie einzelnen, jeweils an der Ein/Ausgabe-Schnittstelle zwischen dem Ein/Ausgabe-Prozessor (IOP I ... IV) des jeweiligen Zentralprozessors (CPU I...IV) und dem zugehörigen Peripherieprozessor (5, 6) eingeschalteten Adress-Pufferspeichern (SB) zur Zwischenspeicherung der jeweils einem der Datenspeichergeräte (DS) zugeordneten, zu Beginn eines jeweils von einem der Zentralprozessoren angestossenen Ein/Ausgabe-Prozesses übertragenen Auswahladressen (ADR), dadurch gekennzeichnet, dass der jeweilige Adress-Pufferspeicher (SB), der zur Zwischenspeicherung von so vielen Adress-Argumenten zum Adressieren der Datenspeichergeräte (DS) vorgesehen ist, wie Datenspeichergeräte mit dem Peripherieprozessor verbunden sind, im Bereich des Peripherieprozessors (5, 6) zwischen dem jeweiligen Schalteingang (A, B) des Schaltvielfachs (MCS) und der Kontrolleinheit (CU 1, 2) des Peripherieprozessors (5, 6) geschaltet ist und unbehindert vom jeweiligen anderen Schalteingang (B, A) sowohl von der Kontrolleinheit (CU 1, 2) als auch von seinem Schalteingang (A, B) bedienbar ist und dass die Ausgänge der Peripherieprozessoren (5, 6) mit je einem Schalteingang (X, Y) eines zweiten Schaltvielfachs (TCF) verbunden sind, das ausgangsseitig über eine Geräteelektronik (DE) mit den Datenspeichergeräten (DS) verbunden ist, derart dass nach Übergabe und Speicherung der Auswahladresse (ADR) die Ausführung des ersten Befehls des Ein/Ausgabe-Prozesses vorläufig zum Zwecke einer späteren Fortsetzung unterbrochen wird und dass, sofern keine Behinderung des eigenen Peripherieprozessors (5 bzw. 6) vorliegt, die zwischengespeicherte Auswahladresse (ADR) benutzt wird, um eine zyklisch-periodische Adressierung des Datenspeichergerätes (DS) durchzuführen und nach erfolgter Auswahl durch Wiederholung der Ausführung des ersten Befehls den vorläufig unterbrochenen Ein/Ausgabe-Prozess fortzuführen.

**Claims**

1. A method for connecting a plurality of central processors (CPU I...IV) to a plurality of data storage devices (DS) by means of at least one of two peripheral processors (5, 6) employing both a switching multiplexer (MCS) which is arranged between the respective peripheral processor (5 or 6) and its respectively assigned central processors (CPU I, CPU III or CPU II, CPU IV), and also individual address buffer stores (SB) which are respectively inserted at the in-/output intersection between the in-/output processor (IOP I...IV) of the respective central processor (CPU I...IV) and the assigned peripheral processor (5, 6), wherein an in-/output operation, which is started by one of the central processors (CPU I...IV), commences with the transmission and intermediate storage of a selection address (ADR), respectively assigned to one of the data storage devices (DS), in the address buffer store (SB), characterised in that following the transmission and storage of the selection address (ADR) the performance of the first command of the in-/output operation is temporarily interrupted for the purpose of a later continuation, and that if there is no hindrance of the separate peripheral processor (5 or 6) the intermediately stored selection address (ADR) is used in order to carry out cyclic-periodical addressing of the data storage device (DS) and to continue the temporarily interrupted in/output operation by repeating the performance of the first command after the achieved selection.

2. A switching arrangement for connecting a plurality of central processors (CPU I...IV) to a plurality of data storage devices (DS) by means of at least one of two peripheral processors (5, 6), employing a switching multiplexer (MCS) which is arranged between the respective peripheral processor (5 or 6) and its respectively assigned central processors (CPU I, CPU III or CPU II, CPU IV), and individual address buffer stores (SB), which are respectively inserted at the in/output intersection between the in/output processor (IOP I...IV) of the respective central processor (CPU I...IV) and the assigned peripheral processor (5, 6), and which serves for the intermediate storage of the selection addresses (ADR) which are respectively assigned to one of the data storage devices (DS) and transmitted at the beginning of an in/output operation wich is respectively started by one of the central processors, characterised in that the respective address buffer store (SB), which is provided for the intermediate storage of as many address arguments for addressing the data storage devices (DS) as data storage devices are connected to the peripheral processor, is inserted in the region of the peripheral processor (5, 6) between the respective switching input (A, B) of the switching multiplexer (MCS) and the control unit (CU 1, 2) of the peripheral processor (5, 6) and is operable both by the control unit (CU 1, 2) and by its switching input (A, B) so as to be unhindered by the respective other switching input (B, A), and that the outputs of the peripheral processors (5, 6) are each connected to a switching input (X, Y) of a second switching multiplexer (TCF) which at the output end is connected to the data storage devices (DS) by means of an apparatus electronics unit (DE) in such a manner that following the transmission and storage of the selection address (ADR) the performance of the first command of the in/output operation is temporarily interrupted for the purpose of a later continuation, and that if there is no hindrance of the separate peripheral processor (5 or 6) the intermediately stored selection address (ADR) is used in order to carry out cyclic-periodical addressing of the data storage device (DS) and to continue the temporarily interrupted in/output operation by repeating the performance of the first command after the achieved selection.

**Revendications**

1. Procédé pour raccorder plusieurs processeurs centraux (CPU I...IV) par l'intermédiaire respectivement d'un parmi au moins deux processeurs périphériques (5, 6) à plusieurs appareils de mémorisation de données (DS), moyennant l'utilisation respectivement d'un multiple de commutation (MCS), prévu entre le processeur périphérique concerné (5 ou 6) et les processeurs centraux (CPU I, CPU III ou CPU II, CPU IV), qui lui sont respectivement associés, et différentes mémoires tampons d'adresses (SB), raccordées respectivement à l'interface d'entrée/sortie entre le processeur d'entrée/sortie (IOP I...IV) du processeur central respectif (CPU I...IV) et le processeur périphérique (5, 6) associé, un processus d'entrée/sortie, déclenché par respectivement l'un des processeurs centraux (CPU I...IV), commençant par la mise en oeuvre de la transmission et de la mémorisation temporaire d'une adresse de sélection (ADR), associée respectivement à l'un des appareils de mémorisation de données (DS), dans la mémoire tampon d'adresses (SB), caractérisé par le fait qu'après la retransmission et la mémorisation de l'adresse de sélection (ADR) , l'exécution de la première instruction du processus d'entrée/sortie est interrompue prématurément en vue de sa poursuite ultérieure et que, dans la mesure où il n'existe aucun empêchement de fonctionnement du processeur périphérique particulier (5, 6) l'adresse de sélection (ADR) mémorisée temporairement est utilisée pour exécuter un adressage périodique cyclique de l'appareil de mémorisation de données (DS) et pour poursuivre, une fois réalisée la sélection, la poursuite du processus d'entrée/sortie interrompu prématurément, grâce à une répétition de l'exécution de la première instruction.

2. Montage pour raccorder plusieurs processeurs centraux (CPU I...IV) par l'intermédiaire respectivement d'un parmi au moins deux processeurs périphériques (5, 6), à plusieurs appareils de mémorisation de données (DS), moyennant l'utilisation respectivement d'un multiple de commutation (MCS), prévu entre le processeur périphérique concerné (5 ou 6) et les processeurs centraux (CPU I, CPU III ou CPU II, CPU IV) qui lui sont respectivement associés, et différentes mémoires tampons d'adresses (SB), raccordées respectivement à l'interface d'entrée/sortie entre le processeur d'entrée/sortie (IOP I...IV) du processeur central respectif (CPU I...IV) et le processeur périphérique (5, 6) associé, un processus d'entrée/sortie, déclenché par respectivement l'un des processeurs centraux (CPU I...IV) commençant par la mise en œuvre de la transmission et de la mémorisation temporaire d'une adresse de sélection (ADR), associée respectivement à l'un des appareils de mémorisation de données (DS), dans la mémoire tampon d'adresses (SB), caractérisé en ce que la mémoire tampon d'adresses respective (SB), qui est prévue pour la mémorisation temporaire d'un nombre d'arguments d'adresses, servant à l'adressage des appareils de mémorisation de données (DS), aussi important que le nombre des appareils de mémorisation de données qui sont reliés au processeur périphérique, est raccordée au niveau du processeur périphérique, (5, 6) entre l'entrée respective de commutation (A), (B) du multiple de commutation (MCS) et l'unité de contrôle (CU 1, 2) du processeur périphérique (5, 6), et peut être commandée sans être gênée par une quelconque autre entrée de commutation (B, A), aussi bien par l'unité de contrôle (CU 1, 2) que par son entrée de commutation (A, B) et que les sorties des processeurs périphériques (5, 6) sont reliées à une entrée respective de commutation (X, Y) d'un second multiple de commutation (TCF), qui est relié du côté sortie, par l'intermédiaire d'un système électronique (DE), aux appareils de mémorisation de données (DS), de telle sorte qu'après la retransmission et la mémorisation d'adresses de sélection (ADR), l'exécution de la première instruction du processus d'entrée/sortie est interrompue prématurément en vue de sa poursuite ultérieure et que, dans la mesure où il n'existe aucun empêchement de fonctionnement du processeur périphérique particulier (5, 6), l'adresse de sélection (ADR) mémorisée temporairement est utilisée pour exécuter un adressage périodique cyclique de l'appareil de mémorisation de données (DS) et pour poursuivre, une fois réalisée la sélection, la poursuite du processus d'entrée/sortie interrompu prématurément, grâce à une répétition de l'exécution de la première instruction.

# FIG 1

0 021 254

**FIG 2**

IOP

CU

MCS – Schalteingang

SL-EIN

SL-AUS

[ADR]

ERKENNEN [ADR]

ADR -REG

[ADR] SB

ADR -ÜR

BUS-EIN

CL

BUS-AUS

A

SV

B

[ADR] SB

0 021 254

| CPU | IOP | MCS-Schalteingang | CU |
|---|---|---|---|

$\frac{SDV}{INT}$ [ADR]   ← SC [ADR] → SB [ADR] → ─ ERKENNEN [ADR]

AUSWAHL [ADR] → ÜBERNAHME [ADR]

BEFEHLSANFORDERUNG[ADR] ← MCS-BEREIT [ADR]

SENDEN-BEFEHL [ADR] → BEFEHLSÜBERNAHME [ADR]

WARTEN [ADR] ← TRENNEN [ADR]

} GERÄTE-AUSWAHL [ADR]

WIEDERHOLUNG DER BEFEHLSANFORDERUNG ← VERBINDEN [ADR] ← BEFEHLSWIEDERHOLUNG [ADR]

SENDEN-BEFEHL [ADR] → BEFEHLSDURCHFÜHRUNG [ADR]

BEFEHLSANFORDERUNG[ADR] ← BEFEHLSKETTUNG [ADR]

SENDEN-BEFEHL [ADR] → BEFEHLS-DURCHFÜHRUNG [ADR]

ENDE [ADR] ← ENDE DER BEFEHLSKETTE [ADR]

UNTERBRECHUNG [ADR] → ZUSTANDSANFORDERUNG ZUR UNTERBRECHUNG [ADR]

UNTERBRECHUNGSANFORDERUNG AN CPU [ADR] ← ZUSTAND DER UNTERBRECHUNG [ADR]